# EUROPEAN PATENT APPLICATION

(11) **EP 1 130 805 A1**
(43) Date of publication of application: **05.09.2001**
(21) Application number: 00850103.3
(22) Date of filing: 16.06.2000
(51) Int. Cl.: H04B 10/08

(54) **Method and arrangement to reduce light leakage in an optical system**

(71) Applicant: TELEFONAKTIEBOLAGET L M ERICSSON (publ), 126 25 Stockholm (SE)
(72) Inventor: Persson, Lars, 117 68 Stockholm (SE)

(57) **Abstract**

The present invention relates to a method to reduce light leakage in an optical communication system. The system comprises a client equipment SDH-1 prepared to communicate bi-directionally with another client equipment SDH-2 via an intermediate network WDM by using optical fibres. The method comprises the following steps:
- Detecting at the intermediate network WDM, loss of optical power from a first transmitter TX1 located in the client equipment SDH-1.
- Discontinue transmission of optical power from the intermediate network WDM towards a first receiver RX1 located in the equipment SDH-1.
- Discontinue transmission of optical power from the first transmitter TX1 towards the intermediate network WDM.

## Description

### TECHNICAL FIELD OF THE INVENTION

The present invention relates to a method and an arrangement to control light radiation in an optical communication system.

### DESCRIPTION OF RELATED ART

Laser diodes are commonly used in optical communication systems for high-speed data transmission. A transmission device used in an optical communication system is equipped with a light amplifying device used to amplify a light beam and enable a long-distance light transfer in an optical fiber. A telecommunication line often comprises at least one terminal station having an optical signal transmitter and an optical signal receiver. Fiber breaks may cause leakage of laser radiation. This radiation can seriously damage a human eye and it is of utmost importance that the laser immediately is shutdown after a break. An automatic protection device can be used for shutting down said transmitter in case of no received optical signal. In the United State Patent US 5,355,250 is disclosed means for detecting presence of light energy and means for shutting down a transmitter, and thereby interrupt emission of light energy. Shut down mechanisms are known in client networks communicating with each other via transmitters and receivers. For example an automatic laser shutdown mechanism is known for usage at the optical line interface between two SDH network elements (SDH: Synchrony Digital Hierarchy). Information is transported from the first SDH-network to the second SDH-network. After detection of information loss at the second SDH-network due to a fiber break, this is reported from the second network to the first network. The transmitter of the first network is turned off. Thereafter, the transmitter of the first network performs restart-trials by transmitting short restart-pulses during for example 2 seconds every 60 seconds. Restart pulses are transmitted until the fiber is repaired. After mending of the fiber, the second network receives a restart-trial pulse sent from the first network. The second network is at that point turned on in direction towards the first network. The new status (fiber is repaired) is established by the transmitting first network which again activate its transmitter permanently. A prerequisite for the transmitter to be activated is that the restart-pulse sent from the first network still is "high" when confirmation returns from the receiving network and is received by the first network. In other words, the new status (fiber repaired) must be reported back before the end of the two seconds in the example above. The information transfer, back and forth between the two SDH-networks, has to be quick and as long as no time consuming intermediate network exists between the two SDH-networks, no problems exist. Recently WDM-networks (WDM: Wavelength Division Multiplexing) have been introduced between the SDH-networks to use the fibers in a more efficient way. Wavelength Division Multiplexing WDM involves a combination of a set of traffic-bearing optical signals onto a single fiber pair. It is evident that these signals must not interact with each other during transmission and that they must be separated for reception at the far end. This is achieved by operating each optical signal on a separate wavelength. Consequently, information has to pass many time consuming elements. When two SDH networks element are connected together without any intermediate time consuming transport network, the information transfer between the network goes quickly. Problems arise when the time consuming intermediate network in-between prevents quick transmitter turn off and later turn on after a fibre break.

### SUMMARY OF THE INVENTION

The present invention solves the problem with delayed laser shutdown and restart after a fibre break in an optical system. The optical system comprises an intermediate network between two client networks. The two client networks communicate with each other via the intermediate network. Problem arises when a fibre break occurs in a fibre between the intermediate network and one of the client networks. Due to delay in the intermediate network a confirmation from the other of the two client networks informing of the new situation will be delayed and quick laser shut down will be obstructed. Restart trials after the fibre has been successfully repaired will in the same way also fail due to the delay in the intermediate network. The problems are caused by the fact that signals announcing either fibre broken or fibre repaired, has to be transported back and forth between the client networks through the intermediate network, before the transmitter can change its state to be either turned off or turned on.

Above problems are solved by the invention by detecting a new status of a fibre (broken or repaired) at the same interface side of the intermediate network, as the incident changing the status, once occurred. A confirmation signal showing the new status is sent back directly from the intermediate network to the transmitter without having to pass through the intermediate network. The state of the laser transmitter can thereby be changed without delay.

The object of the present invention is to prevent prolonged laser transmission leakage, which can be injurious for a human eye.

More in detail, the invention in a first aspect discloses a method to operate a laser in an optical communication system comprising an intermediate network between a first client equipment and a second client equipment. The first equipment comprises a first transmitter sending optical information to the second client equipment via the intermediate network. The method comprises the following steps:
- detecting loss of optical information from the first transmitter, at the intermediate network;
- effecting the intermediate network to influence the first client equipment to prepare shut of down the first transmitter;
- Shutting down the first transmitter in the first client equipment.

In another aspect of the invention, when the first transmitter has been turned off for example as disclosed above and after repair of the fibre, the method comprises the following steps:
- detection at the intermediate network, of a received pulse from the first transmitter;
- effecting the intermediate network to influence the first client equipment to prepare turn on, of the first transmitter;
- Turning on the first transmitter in the first client equipment.

An advantage with the invention is that prolonged laser transmission leakage, which can be injurious for a human eye, is prevented.

Another advantage is that the shut-off, of a transmitter, after a fibre break can be done immediately without disturbing delays.

Another advantage with the invention is that start-pulses can be kept short due to fast transportation. Consequently dangerous leakage can be avoided.

Yet another advantage is prevention of unsuccessful restart-trials after mending of fibre-break.

The invention will now be described more in detail with reference to exemplifying embodiments thereof and also with reference to accompanying drawings.

### DESCRIPTION OF THE DRAWINGS

Figure 1a discloses a block schematic illustration according to prior art where two client networks are connected to each other.
Figure 1b discloses a block schematic illustration according to prior art where two client networks are connected to each other. A fibre break exists between the two client networks.
Figure 1c discloses a block schematic illustration according to prior art where two client networks are connected to each other. The fibre break shown in figure 1b has been repaired.
Figure 2 discloses a block schematic illustration according to the invention where two client networks are connected to each other via an intermediate network. A fibre break exists between one of the client networks and the intermediate network.
Figure 3 is a flow chart disclosing the most important steps of the method according to the invention shown in figure 2.
Figure 4 discloses a block schematic illustration according to the invention where two client networks are connected to each other via an intermediate network. The fibre break shown in figure 2 has been repaired.
Figure 5 is a flow chart disclosing the most important steps of the method according to the invention shown in figure 4.

### DESCRIPTION OF PREFERRED EMBODIMENTS

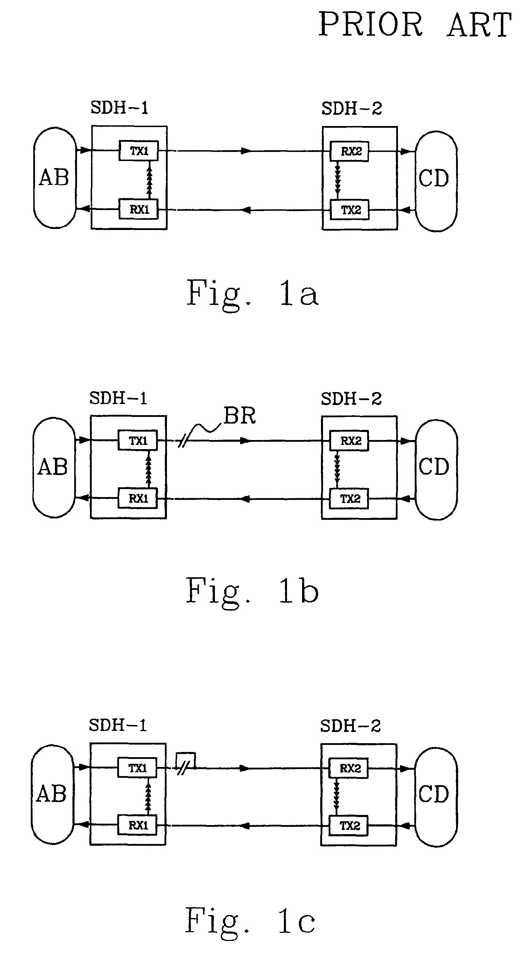

A communication system according to prior art is disclosed in figure 1. The system in this example comprises two public telephone stations of PSTN-type, a so-called first station AB and a second station CD. The system also comprises network equipment SDH-1 and SDH-2 of Synchrony Digital Hierarchy type, a so-called first equipment SDH-1 and second equipment SDH-2 connected to each other via optical fibre cables. The first client equipment SDH-1 is connected to the first station AB and comprises a first transmitter TX1 and a first receiver RX1. The first transmitter and the first receiver are connected to each other so that the receiver can send a control message to the transmitter. The second client equipment SDH-2 is connected to the second station CD and comprises a second transmitter TX2 and a second receiver RX2. The second transmitter and the second receiver are connected to each other. The first transmitter TX1 is also connected to the second receiver RX2 via fibre cables. The second transmitter TX2 is in the same way connected to the first receiver RX1. The transmitter-receiver pair TX1-RX2 and TX2-RX1 communicates by sending optical information, from transmitter to receiver. The two public stations AB and CD can communicate with each other via the network equipment's SDH-1 and SDH-2.

In figure 1a can be seen, with arrow-symbols between the equipments SDH-1 and SDH-2, how information is sent according to prior art from the first public station AB, via the first transmitter TX1 and the second receiver RX2, to the second public station CD. Information is also sent from the second public station CD, via the second transmitter TX2 and the first receiver RX1, to the first public station AB.

In prior art figure 1b, a fibre break symbol BR can be seen between the first network equipment SDH-1 and the second network equipment SDH-2, in direction public station AB to public station CD. A laser beam sent through the broken fibre can be of severe damage for a human eye and it is important that the transmitter sending the laser beam immediately is shut off. When it is detected at the second receiver RX2, that the optical information sent from the first transmitter TX1 is lost, a notification signal is transmitted from the second receiver RX2 to the second transmitter TX2. The notification signal instructs the second transmitter TX2 to turn off the sending of light radiation, and consequently also the sending of information. This is disclosed in the figure with a manifold of arrow-symbols between the receiver and transmitter within the same client network. When the first receiver RX1 detects loss of optical power from the second transmitter TX2, a notification signal is transmitted from the first receiver RX1 to the first transmitter TX1. The notification signal instructs the first transmitter TX1 to turn off the sending of light radiation, and the laser beam is shut off. The first transmitter TX1 thereafter starts to transmit restart pulses with duration of two seconds every 60 seconds as long as the fibre-break still exists.

In the prior-art figure 1c the fibre break in figure 1b has been amended. As mentioned, the first transmitter TX1 transmits restart pulses for two seconds every 60 seconds. When the fibre is amended and the second receiver *RX2* receives a pulse, a notification signal is transmitted from the second receiver RX2 to the second transmitter TX2. The notification signal instructs the second transmitter TX2 to turn on the optical power in direction RX1. When the first receiver RX1 thereafter detects the light radiation sent from the second transmitter TX2, a notification signal is transmitted from the first receiver RX1 to the first transmitter TX1. The notification signal instructs the first transmitter TX1 to turn on the sending of the laser beam.

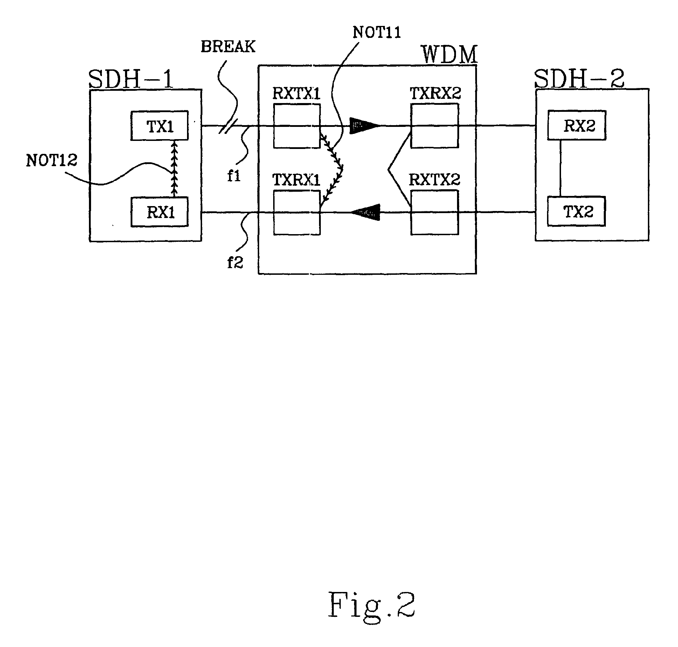

The disclosed example in figure 1 is an example according to prior art. It is important that a notification from the effected fibre announcing that the fibre is broken or amended quickly is transported via the second equipment SDH-2 to the first equipment SDH-1. Problem arises when there is an intermediate network between the two equipment's SDH-1 and SDH-2, delaying the notification. How this is handled according to the invention will now be explained together with figure 2.

A communication system according to the invention is disclosed in figure 2. The system comprises the same type of network equipment SDH-1 and SDH-2 as disclosed in figure 1. It is to be noted that the network types are of minor relevance to the general idea behind the invention. These networks are just to be seen as examples. The first equipment SDH-1 and the second equipment SDH-2 are connected to each other via optical fibre cables (f1, f2) but unlike in the prior art example, an intermediate network WDM now is located between the first equipment SDH-1 and the second equipment SDH-2. The first equipment SDH-1 comprises a first transmitter TX1 and a first receiver RX1. The first transmitter TX1 and the first receiver RX1 are connected to each other and the receiver RX1 can send messages like instructions to the transmitter TX1. The second equipment comprises a second transmitter TX2 and a second receiver RX2. The second transmitter TX2 and the second receiver RX2 are connected to each other and the receiver RX2 can send instructions to the transmitter TX2. The first transmitter TX1 transmits information via optical fibres to the second receiver RX2. In the same manner, the second transmitter TX2 transmits information via optical fibres to the first receiver RX1. The transfer of information from a transmitter to a receiver located on the opposite side of the intermediate network WDM has to go through the intermediate network. The transmitter-receiver pair TX1-RX2 and TX2-RX1 on opposite sides communicates with each other via the intermediate network. Like in the prior art example, public stations (not shown in figure 2) communicate with each other via the network equipment SDH-1 and SDH-2. The intermediate network WDM comprises, on the interface side against the first equipment SDH-1, a first receiving transceiver RXTX1 and a first transmitting transceiver TXRX1. The intermediate network WDM comprises, on the interface side against the second equipment SDH-2, a second receiving transceiver RXTX2 and a second transmitting transceiver TXRX2. The first transmitter TX1 sends information to the first receiving transceiver RXTX1. The first receiving transceiver RXTX1 forwards the information through the intermediate network WDM to the second transmitting transceiver TXRX2. The second transmitting transceiver TXRX2 forwards the information to the second receiver RX2. The second transmitter TX2 forwards information, in the same manner, to the first receiver RX1, through the second receiving transceiver RXTX2 and the first transmitting transceiver TXRX1. The first receiving transceiver RXTX1 can also send instructions to the first transmitting transceiver TXRX1 and the second receiving transceiver RXTX2 can send instructions to the second transmitting transceiver TXRX2. This can be seen in figure 2 with arrow-symbols in manifold between the two transceivers in the intermediate network facing the same client equipment.

In figure 2, a fibre break BREAK is shown between the first network equipment SDH-1 and the intermediate network WDM. The fibre break is located between the first transmitter TX1 and the first receiving transceiver RXTX1. According to the invention, the method comprises the following steps:
- Detecting at the first receiving transceiver RXTX1 in the intermediate network WDM that the optical information sent from the first transmitter TX1 has been lost due to the error BREAK.
- Transmission of a first notification signal NOT11 from the first receiving transceiver RXTX1 to the first transmitting transceiver TXRX1. The notification signal NOT11 announces the loss of optical information from the first transmitter TX1.
- The first transmitting transceiver TXRX1 is turned off. Consequently no optical information is transported from the first transmitting transceiver TXRX1 to the first receiver RX1.
- The loss of optical power from the first transmitting transceiver TXRX1 is detected at the first receiver RX1.
- A second notification signal NOT12 is sent from the first receiver RX1 to the first transmitter TX1. The notifying signal announces the loss of optical information from the first transmitting transceiver TXRX1.
- The first transmitter TX1 is turned off.

The above first aspect of the invention discloses a method to turn off a laser in an optical communication system after a fibre break. The laser beam is turned off according to the invention without time consuming signal transportation back and forth through the intermediate network.

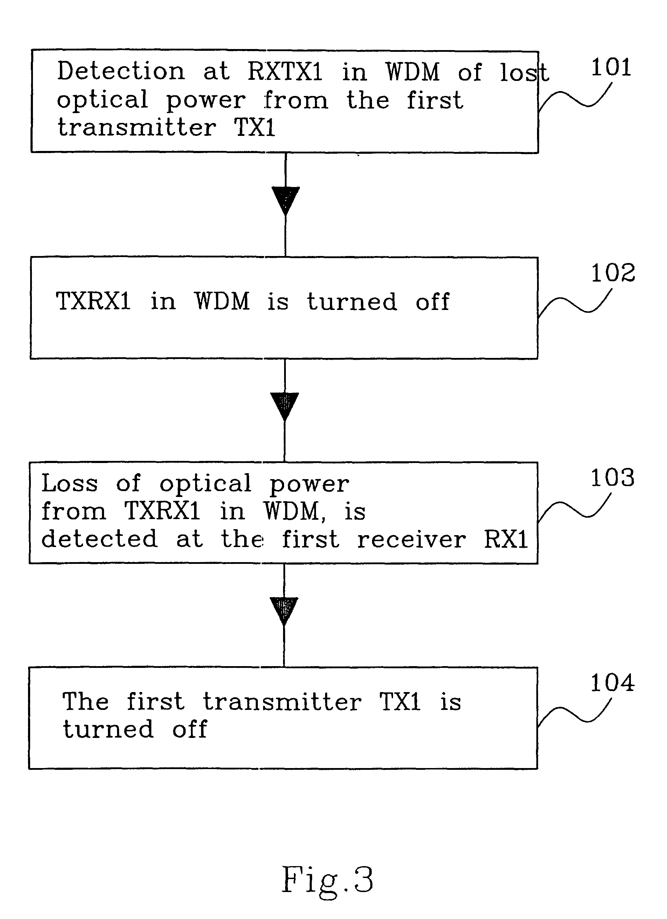

Above has been discussed the inventive method when a fibre break or similar has occurred. In figure 3, the most essential steps of the method are shown in a flow chart. The already described figures 1 and 2 are to be read together with figure 3. The method disclosed in figure 3 comprises the following steps:
- Detection at the first receiving transceiver RXTX1 in the intermediate network WDM that the optical information sent from the first transmitter TX1 is lost. This is disclosed in figure 3 with a block 101.
- The first transmitting transceiver TXRX1 in the WDM-network is turned off. Consequently no optical information is transported from the first transmitting transceiver TXRX1 to the first receiver RX1. This is disclosed in figure 3 with a block 102.
- The loss of optical power from the first transmitting transceiver TXRX1 in the WDM-network is detected at the first receiver RX1. This is disclosed in figure 3 with a block 103.
- The first transmitter TX1 is turned off. This is disclosed in figure 3 with a block 104.

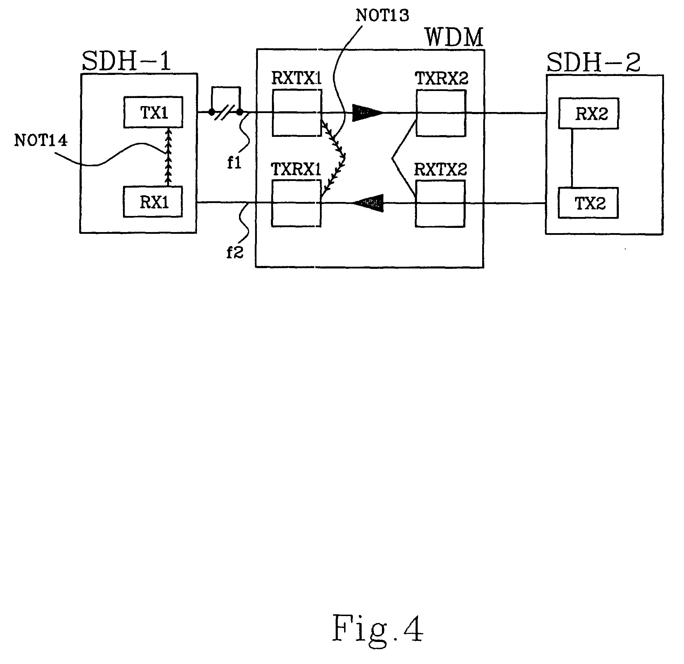

In figure 4 a second aspect of the invention can be seen. As soon as the laser is turned off, restart-trials begin. In the restart-trial phase, the transmitter sends laser pulses with duration of approximately two seconds, every 60 seconds. As long as a fibre break still exists between the first transmitter TX1 and the receiving transceiver RXTX1, the transceiver RXTX1 will not receive any pulses. The repaired fibre f1 can be seen in figure 4. After repair of the fibre, the method comprises the following steps:
- Detecting at the intermediate network WDM of a received pulse, received by the receiving transceiver RXTX1 from the first transmitter TX1.
- Transmission of a first notification signal NOT13 from the first receiving transceiver RXTX1 to the first transmitting transceiver TXRX1. The notification signal announces that a pulse has been received.
- The optical power of the first transmitting transceiver TXRX1 is turned on.
- The optical power from the first transmitting transceiver TXRX1 is detected at the first receiver RX1.
- A second notification signal NOT14 is sent from the first receiver RX1 to the first transmitter TX1. The notifying signal announces the received optical information from the first transmitting transceiver TXRX1.
- The first transmitter TX1 is turned on.

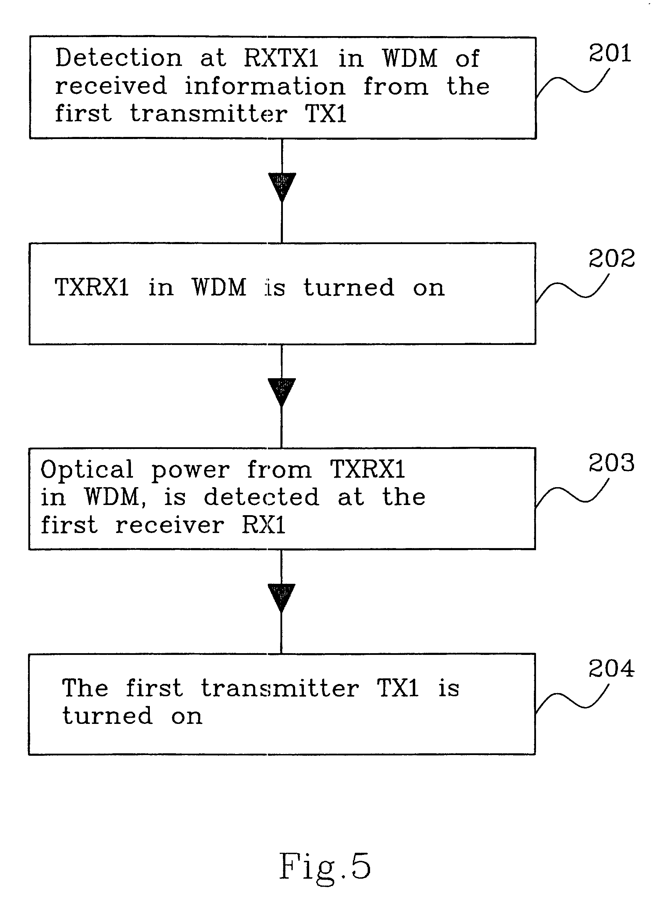

Above has been discussed the inventive method when the fibre break has been repaired. In figure 5, the most essential steps of the method are shown in a flow chart. The already described figures 1 and 2 are to be read together with figure 3. The method disclosed in the figure comprises the following steps:
- Detecting at the intermediate network WDM of a received pulse, received by the receiving transceiver RXTX1 from the first transmitter TX1. This is disclosed in figure 5 with a block 201.
- The first transmitting transceiver TXRX1 is turned on. This is disclosed in figure 5 with a block 202.
- Optical power from the first transmitting transceiver TXRX1 is detected at the first receiver RX1. This is disclosed in figure 5 with a block 203.
- The first transmitter TX1 is turned on. This is disclosed in figure 5 with a block 204.

Different variations are possible within the scope of the invention. For example, instead of turning off transmission of optical power towards the first client equipment after an error, a message can be sent from the intermediate network in case of a single fiber break. It is to be noted that the same algorithm is used in both directions. As already have been mentioned different kinds of communication networks are possible to use out of the ones already mentioned.

The invention is thus not restricted to the above described and illustrated exemplifying embodiments, and modifications can be made within the scope of the claims.

## Claims

1. Method to reduce light leakage in an optical communication system comprising a first client equipment (SDH-1) prepared to communicate bi-directionally with a second client equipment (SDH-2) via an intermediate network (WDM) by using optical fibres (f1, f2), which method is **characterised by** the following steps:
- detecting at the intermediate network (WDM), loss of optical power from a first transmitter (TX1) which is located in the first client equipment (SDH-1);
- discontinue transmission of optical power from the intermediate network (WDM) towards a first receiver (RX1) which is located in the first equipment (SDH-1);
- discontinue transmission of optical power from the first transmitter (TX1) towards the intermediate network (WDM).

2. Method according to claim 1, which first receiver (RX1) is connected to the first transmitter (TX1) and which network (WDM) comprises a first receiving transceiver (RXTX1), prepared to forward information received from the first transmitter (TX1) towards the second client equipment (SDH-2), which network also comprises a first transmitting transceiver (TXRX1) connected to the first receiving transceiver (RXTX1), prepared to forward information from the second client equipment (SDH-2) towards the first receiver (RX1), which method comprises the following further steps:
- transmission of a first notification signal (NOT11) from the first receiving transceiver (RXTX1) to the first transmitting transceiver (TXRX1), notifying the loss of the optical power from the first transmitter (TX1) ;
- discontinue transmission of optical power from the first transmitting transceiver (TXRX1) towards the first receiver (RX1).
- detecting at the first receiver (RX1), loss of optical power from the first transmitting transceiver (TXRX1);
- transmission of a second notification signal (NOT12) from the first receiver (RX1) to the first transmitter (TX1), notifying the loss of optical power from the first transmitting transceiver (TXRX1).

3. Method according to claim 1 or 2, whereby the loss of optical information is due to a fibre (f1) break in the transmission path from the first client equipment (SDH-1) towards the intermediate network (WDM).

4. Method to reduce light leakage in an optical communication system comprising a first client equipment (SDH-1) prepared to communicate bi-directionally with a second client equipment (SDH-2) via an intermediate network (WDM), whereby an optical fibre (f1) used as transmission path from the first client equipment towards the intermediate network is effected by an error and which first equipment (SDH-1) comprises a first transmitter (TX1) in a re-start state transmitting optical pulses in direction towards the intermediate network, which method is **characterised by** the following steps:
- mending of the error;
- detecting at the intermediate network (WDM), of a received optical pulse from the first transmitter (TX1);
- transmitting optical power from the intermediate network (WDM) towards the first equipment (SDH-1) ;
- turning on the sending out of optical power from the first transmitter (TX1) towards the intermediate network (WDM).

5. Method according to claim 4, which first equipment (SDH-1) also comprises a first receiver (RX1) connected to the transmitter (TX1) and which intermediate network (WDM) comprises a first receiving transceiver (RXTX1), prepared to forward data from the first transmitter (TX1) towards the second client equipment (SDH-2), which network also comprises a first transmitting transceiver (TXRX1) connected to the first receiving transceiver (RXTX1), prepared to forward information from the second client equipment (SDH-2) towards the first receiver (RX1), which method comprises the following further steps:
- transmission of a first notification signal (NOT13) from the first receiving transceiver (RXTX1) to the first transmitting transceiver (TXRX1), notifying the received pulse;
- detecting at the first receiver (RX1), of received optical power from the first transmitting transceiver (TXRX1) ;
- transmission of a second notification signal (NOT14) from the first receiver (RX1) to the first transmitter (TX1), notifying the received optical power, from the first transmitting transceiver (TXRX1).

6. Method to reduce light leakage in an optical communication system comprising a first client equipment (SDH-1) prepared to communicate with a second client equipment (SDH-2) via an intermediate network (WDM), which method is **characterised by** the following steps:
- detecting at the intermediate network (WDM), loss of optical power from the first client equipment (SDH-1);
- Sending from the intermediate network (WDM) towards the first equipment (SDH-1), announcement of loss of optical power;
- discontinue transmission of optical power from the first client equipment (SDH-1).

7. Method to reduce light leakage in an optical communication system comprising a first client equipment (SDH-1) prepared to communicate with a second client equipment (SDH-2) via an intermediate network (WDM), whereby a transmission path from the first client equipment towards the intermediate network is effected by an error and which first equipment (SDH-1) is in a re-start state transmitting optical pulses in direction towards the intermediate network, which method is **characterised by** the following steps:
- mending of the error;
- detecting at the intermediate network (WDM), of a received optical pulse from the first equipment (SDH-1);
- sending from the intermediate network (WDM) towards the first equipment (SDH-1), announcement of received optical power;
- turning on the sending out of optical power from the first equipment (SDH-1) towards the intermediate network (WDM).

8. Arrangement to reduce light leakage in an optical communication system comprising a first client equipment (SDH-1) prepared to communicate bi-directionally with a second client equipment (SDH-2) via an intermediate network (WDM) using optical fibres (f1, f2), which arrangement is **characterised by** the following means:
- means for detecting at the intermediate network (WDM), loss of optical power from the first client equipment (SDH-1);
- means to discontinue transmission of optical power from the intermediate network (WDM) towards the first equipment (SDH-1) ;
- means to discontinue transmission of optical power from the first transmitter (TX1) towards the intermediate network (WDM).

9. Arrangement according to claim 8, which first receiver (RX1) is connected to the first transmitter (TX1) and which network (WDM) comprises a first receiving transceiver (RXTX1), prepared to forward information received from the first transmitter (TX1) towards the second client equipment (SDH-2), which network also comprises a first transmitting transceiver (TXRX1) connected to the first receiving transceiver *(RXTX1)*, prepared to forward information from the second client equipment (SDH-2) towards the first receiver (RX1), which arrangement comprises the following further means:
- means for transmission of a notification signal from the first receiving transceiver (RXTX1) towards the first client equipment (SDH-1) ;
- means to discontinue transmission of optical power from the first transmitting transceiver (TXRX1) towards the first client equipment (SDH-1) ;
- means for detecting at the first client equipment, loss of optical power from the first transmitting transceiver (TXRX1) ;
- means for transmission of a notification signal from the first client equipment to the first transmitter (TX1).

10. Arrangement to reduce light leakage in an optical communication system comprising a first client equipment (SDH-1) prepared to communicate bi-directionally with a second client equipment (SDH-2) via an intermediate network (WDM), whereby an optical fibre (f1) used as transmission path from the first client equipment towards the intermediate network is effected by an error and which first equipment (SDH-1) comprises a first transmitter (TX1) in a re-start state transmitting optical pulses in direction towards the intermediate network, which arrangement is characterised by the following means:
- means for detecting at the intermediate network (WDM), a received optical pulse from the first transmitter (TX1);
- means for transmitting optical power from the intermediate network (WDM) towards the first equipment (SDH-1) ;
- means to turn on the sending out of optical power from the first transmitter (TX1) towards the intermediate network (WDM).

11. Arrangement according to claim 11, which first equipment (SDH-1) also comprises a first receiver (RX1) connected to the transmitter (TX1) and which intermediate network (WDM) comprises a first receiving transceiver (RXTX1), prepared to forward data from the first transmitter (TX1) towards the second client equipment (SDH-2), which network also comprises a first transmitting transceiver (TXRX1) connected to the first receiving transceiver (RXTX1), prepared to forward information from the second client equipment (SDH-2) towards the first receiver (RX1), which arrangement comprises the following further means:
- means for transmission of a notification signal from the first receiving transceiver (RXTX1) to the first transmitting transceiver (TXRX1);
- means to detect at the first receiver (RX1), of received optical power from the first transmitting transceiver (TXRX1);
- means for transmission of a notification signal from the first receiver (RX1) to the first transmitter (TX1).
